# EUROPEAN PATENT APPLICATION

(11) **EP 1 603 146 A1**
(43) Date of publication of application: **07.12.2005**
(21) Application number: 04102542.0
(22) Date of filing: 04.06.2004
(51) Int. Cl.: H01H 37/74, G21C 1/30, G21C 9/02

(54) **Temperature sensitive safety device for systems susceptible of overheating**

(71) Applicant: The European Community, represented by the European Commission, 1049 Brussels (BE)
(72) Inventor: WIDER, Hartmut, 1861, JE BERGEN (NL); CARLSSON, Johan, 1821, AK ALKMAAR (NL)
(74) Representative: Ocvirk, Philippe

(57) **Abstract**

A temperature sensitive safety device (10) comprises a hollow housing (18); two electric conductors (20, 20') guided through the housing (18); and temperature sensitive means (22) associated with the electric conductors (20, 20') and designed to normally provide an electrical connection between the electric conductors in the housing, and, in response to an increase of temperature above a threshold temperature, break the electrical connection between the two electric conductors. The housing (18) has a shape that is designed so as to concentrate thermal radiations transmitted therethrough in a predetermined region of the housing; and the temperature sensitive means (22) are located in this predetermined region.

## Description

### FIELD OF THE INVENTION

The present invention generally relates to a temperature sensitive safety device for systems susceptible of overheating, such as e.g. an accelerator-driven nuclear system.

### BACKGROUND OF THE INVENTION

In an accelerator-driven nuclear system (ADS), an accelerated particle beam (e.g. proton beam) is guided in a beam pipe and directed onto a nuclear fuel target through a vessel filled at least partially with a coolant, e.g. a liquid metal.

It is well known that in case of cooling disturbances and also reactivity accidents in a liquid metal-cooled ADS, the only means of reducing the power to safe levels is to switch off the accelerator or interrupt the particle beam.

For switching off the accelerator, active and also complex passive safety systems have been suggested. Active systems will e.g. rely on temperature measurements leading to alarms in the control room when too high values are detected. Complex passive systems will e.g. rely on a computer logic that will lead to an automatic shut-off of the accelerator when a certain percentage of thermocouple readings are too high.

US-A1-2003/0035505 and EP 0 973 172 describe three types of passive devices that lead to a flooding of the proton guide pipe. The devices described therein have the disadvantage that the part of the beam pipe close to the proton source may be destroyed and, if the beam is not shut-off eventually, the reactor vessel may experience a creep failure.

For sodium-cooled nuclear reactors, electromagnets with an iron core have been proposed to hold safety rods of absorber material. When the sodium coolant temperature becomes higher than the Curie point (770°C for iron), the iron de-magnetizes and the safety rods are released. A disadvantage of this approach is that only at this temperature the release can be triggered.

### OBJECT OF THE INVENTION

The object of the present invention is to provide an improved safety device that is adapted for use in an ADS or other types of systems susceptible of overheating such as current and new reactor designs, internal combustion engines, electrical engines and appliances or industrial machines or installations. This object is achieved by a temperature sensitive safety device as claimed in claim 1.

### SUMMARY OF THE INVENTION

The temperature sensitive safety device of the invention comprises a hollow housing and two electric conductors guided through the housing. A temperature sensitive means is associated with the electric conductors and designed to normally provide an electrical connection between these electric conductors inside the housing, and, in response to an increase of temperature surrounding the device above a threshold temperature, break the electrical connection between the two electric conductors. According to the present invention, the housing has a shape that is designed so as to concentrate thermal radiations transmitted through the housing in a predetermined region of the housing. The temperature sensitive means are located in this predetermined region.

The particular shape of the housing of the present safety device thus causes a focusing of the thermal radiations transmitted through the housing walls. When the housing heats up due to an increase of the temperature surrounding the housing, the transmitted thermal radiations strongly heat up the temperature sensitive means placed in the predetermined region of the housing due to the focusing effect. As the temperature sensitive means will reach the threshold temperature, the electrical connection between the two conductors will break up, interrupting the circuit line in which the safety device is mounted. Due to its particular structure, the safety device of the invention will rapidly react to a temperature increase.

In practice, the safety device will be serially connected in the power supply line of the electrical apparatus for which the power supply is to be interrupted when the medium in which the safety device is placed rises above the threshold temperature. Typically, when used in an ADS, the safety device is placed in the stream of reactor coolant and is serially connected in the supply line of the proton accelerator. Hence, as soon as the coolant temperature will reach the threshold temperature, the circuit breaking function of the safety device will be triggered, thereby interrupting the accelerator power supply.

As a result, the present invention provides a simple and passive safety device for interrupting or switching off the particle beam, that shall permit to further reduce the probability of serious accidents and make people feel more confident about safety of accelerator driven systems.

Although the present safety device is particularly well suited for application in the nuclear field (e.g. for current and new reactors) to interrupt a power supply in case the coolant reaches abnormal temperatures, it is also applicable in a variety of applications where a circuit line is to be interrupted, should the monitored medium reach a predetermined temperature. In particular, the possible use of the safety device in a variety of media (liquids, aggregates, solids or gases) as well as its simplicity of construction and handling make it suitable for application in: chemical plants, steel making or other metal industries, and in electrical appliances, industrial machines or installations, electrical motors and combustion engines.

The housing is preferably designed so that a predominant part of the transmitted thermal radiations are directed towards the predetermined region. This allows an improved temperature sensitivity, as the transmitted thermal radiation will directly meet the temperature sensitive means, thereby providing a fast heating up, and thus, the desired reaction.

The housing shall advantageously have an inner spherical shape because the inner surfaces radiate preferentially to the centre of the sphere. In such a case, the temperature sensitive means are placed in the central region of the housing. Indeed, the sphere is particularly interesting as the thermal radiations concentrate in the centre of the spherical volume defined by the inner housing wall. Accordingly, the housing shall advantageously be a hollow element of generally spherical shape. However, the housing shape can be varied to preferentially concentrate the transmitted thermal radiations in one or more predetermined regions. Additionally this housing shall preferably have a low overall heat capacity.

Depending on the application, the housing may have an outer diameter comprised between 1 and 10 cm and a wall thickness comprised between 0.5 mm and 5 mm. For application in an ADS, it preferably has an outer diameter between 2 and 5 cm, with a wall thickness between 1 to 3 mm. However, if allowed by the applications, the housing may have larger dimensions. Increasing the housing diameter will increase the inner housing surface and hence the amount of transmitted radiation.

In a preferred embodiment, the temperature sensitive means comprises a heat collecting structure through which current circulating between the two electrical conductors passes. A first of the two electric conductors is joined to the heat collecting structure by a fusible body made of a material that melts when the threshold temperature is reached. The second electric conductor is connected to said first electric conductor through said heat collecting structure. The heat collected by the heat collecting structure through radiation permits to heat up the fusible material. As soon as the fusible body will reach its melting temperature through radiation and thermal conduction, the fusible body will melt, separate from the first conductor and fall due to gravity, thereby breaking the electrical connection. The focusing effect provided by the housing and the high conductivity of the temperature sensitive design ensures a fast melting of the fusible drop. It will be understood that the material of the fusible drop will normally be selected so that its melting temperature corresponds to the desired threshold temperature at which the circuit breaking function of the safety device is to be triggered.

If the electrical conductivity of the heat collecting structure is sufficient, the first conductor may simply be joined to the structure by the fusible body whereas the second conductor can be joined thereto by any appropriate means, e.g. by welding. The joining of the second conductor does not need to melt at the threshold temperature. Alternately, the connection between the two electrical conductors can be provided by a piece of electrical conductor, preferably of good electrical conductivity, that is integral with the heat collecting structure. In this last case, the piece of electrical connector extends between the fusible body and the fixture point of the second electrical conductor. Also, the use of an electrically conductive fusible material facilitates the electrical connection of the first conductor to the heat collecting structure.

Referring more particularly to the heat collecting structure, it shall preferably consist of three similar disks assembled so that each disk has an angle of 90° with the other ones and that each of the disks passes through the centre of the imaginary sphere following the edges of said disks. In such a case, the first conductor is joined to the heat collecting structure by the fusible body about the centre of the heat collecting structure. The second electrical conductor is joined to the heat collecting structure at a periphery thereof. Alternatively, the heat collecting structure may be a hollow sphere. The two electrical conductors may thus be joined to the hollow sphere on its outer surface, at least one of the conductors being joined by a fusible material.

In connection with the above described embodiment using a heat collecting structure, the electrical conductor which is not connected to the heat collecting structure by the fusible material advantageously has a greater length than the other one. This allows the heat collecting structure to fall by gravity as the fusible body melts. Furthermore, a fixed joining of the longer conductor to the heat collecting structure permits to hold back the falling heat collecting structure. This ensures that the wire that has become loose due to the melting of the fusible will not touch the heat collecting structure.

According to another embodiment, the temperature sensitive means comprises an electrically conductive fusible body made of a material that melts when the threshold temperature is reached, this fusible body bridging the ends of the two electrical conductors. In this embodiment, the fusible body preferably takes the form of a full or hollow generally spherical element. The preferred diameter for a hollow sphere is between 0.5 and 1.5 cm and the wall thickness between 0.1 and 0.3 mm. In this embodiment the use of fusible material having good electrical conductivity is of advantage.

Additionally, the device of the invention may comprise biasing means associated with the heat collecting structure or the fusible sphere that tend to discontinue the electrical connection between the electrical conductors. This will ensure a clean and rapid disconnection of the electrical contact once the temperature of the fusible material will reach its melting temperature. For example, a spring may be connected at one end to the heat collecting element or the fusible sphere and at the other end to the housing wall. The spring extension in the regular operating state is preferably more than half the diameter of the disks of the temperature sensitive element. For application in the nuclear field, such a spring is preferably coated with a strong neutron absorber material.

Another way of removing the temperature sensitive element is to add a mild explosive material to the fusible material that blows up at the threshold temperature.

It shall be noted that for application in an ADS with a housing diameter of about 2 to 5 cm and when using a heat collecting structure taking the form of a disk cross, the disks may have a diameter between 0.5 cm and 2.0 cm and a wall thickness of about 0.2 to 2 mm.

When the device employs a heat collecting structure in the form of a hollow sphere, the preferred diameter of this hollow sphere is between 0.5 and 1.5 cm and its wall thickness between 0.1 and 0.3 mm.

To improve the heat-exchange of a spherical fusible body or heat collecting structure, they may advantageously be provided with well conducting, low heat capacity fins on their outer surfaces.

The heat collecting structure is preferably made of materials having low density and heat capacity and a high thermal conductivity i.e. a high diffusivity (for Al: 97•10⁶ m²/s; for Be: 59 •10⁶ m²/s; for Ag: 174 •10⁶ m²/s; for SiC: 230 •10⁶ m²/s - all at 300K). By decreasing the mass of the system the total heat capacity can also be reduced.. Basically, depending on the application, a variety of alloys or pure metals or any materials with a high thermal conductivity, reasonable strength and high absorptivity (close to 1) can be used. The latter can also be achieved through special coatings, paints, oxidizing or an anodizing finish.

For an improved efficiency, the housing is preferably made of a material having a high thermal diffusivity. Furthermore, the emissivity should preferably be high, but still reasonably below 1 (e. g. 0.9) so that the directional distribution of the radiation from the inner housing wall is maintained. This can be achieved by providing adapted coatings, paints, oxidizing or an anodising finish on the inner housing surface. It will be understood that the housing shall be made of a material having a melting temperature above the threshold temperature, and preferably considerably higher than the service temperature of the device itself. For lower service temperatures, e.g. for application with engines, test industrial applications, etc., aluminium or its alloys (melting point in the range of 500 to 600°C) or silver and its alloys (melting point 600-1000°C) are preferred, due to their high thermal diffusivity and good workability. For medium service temperatures of about 300°C, e.g. in Light Water Reactors (LWRs), the housing may still be made from aluminium or its alloys but beryllium (melting point about 1280°C) is also a possibility. For higher temperatures, e.g. in Pb/Bi or Pb cooled reactors or ADS or gas-cooled high temperature reactors, beryllium or steel (melting point about 1400°C) are the preferred materials for the housing. The advantage of steel is its ease of fabrication. In such a case involving application in the nuclear field, the steel should preferably be free of molybdenum and niobium as they absorb neutrons and would heat the housing. Alternatively, the housing may be made from ceramic material having a high diffusivity such as beryllium oxide, magnesium oxide or silicon carbide, which can optionally be strengthened by including carbon fibres. When using beryllium (melting point 1280°C), the housing may be protected by an outer aluminium coating to make it resistant to Pb/Bi corrosion.

The housing is preferably sealed to prevent any entry of surrounding medium. In this connection, the electrical conductors are preferably two electric wires that are guided through an insulator so that the electric wires are insulated from each other and from the housing, while the thermally responsive element connects the extremities of the electric wires.

In order to ensure that the two electrical conductors (typically wires) do not get in contact with each other after the fusible melts, both of them are advantageously electrically insulated with high temperature material (e.g. Al₂O₃ sleeves).

Advantageously, the safety device comprises leak-detecting means to detect the entrance of the surrounding medium in the housing, as it may disturb the operation of the device.

### BRIEF DESCRIPTION OF THE DRAWINGS

The present invention will now be described, by way of example, with reference to the accompanying drawings, in which:
- FIG. 1:: is a schematic section of a preferred embodiment of a thermally sensitive safety device according to the present invention, the device being connected in a power supply line and placed in a stream of coolant fluid;
- FIG. 2:: is a schematic perspective view of the heat collecting structure used in the embodiment of Fig.1;
- FIGS. 3 to 5:: are planar views of the elements from which the structure of Fig.2 is build;
- Fig. 6:: is a schematic view of an alternate heat collecting structure;
- Fig. 7:: is a graph showing the temperature of the fusible drop on the heat collecting structure of Fig.1 and the housing temperature as function of time when the safety device is subjected to a temperature ramp in a stream of water; and
- Fig.8:: is a schematic section view through another embodiment of a thermally sensitive safety device according to the present invention.

### DETAILED DESCRIPTION OF PREFERRED EMBODIMENTS

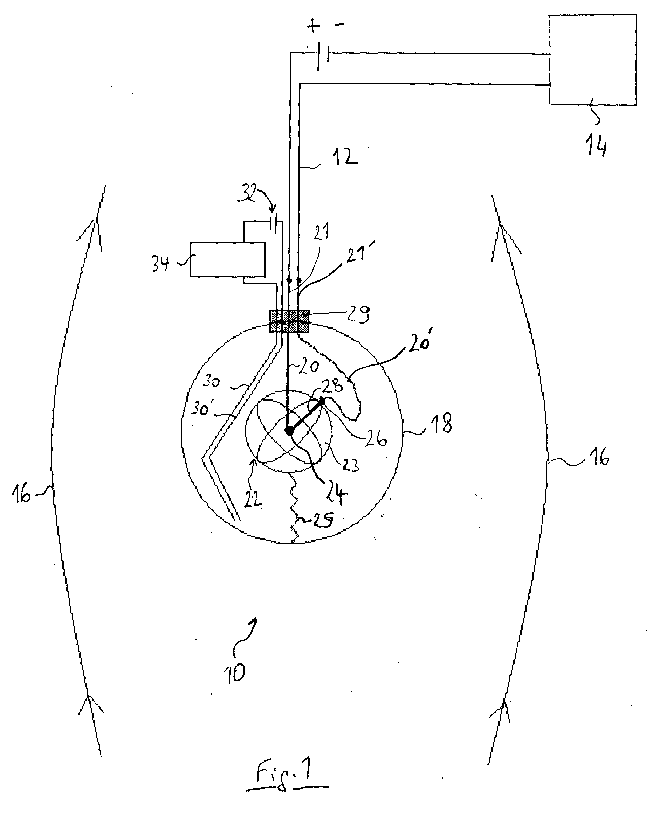

A first preferred embodiment of a temperature sensitive safety device 10 in accordance with the present invention is schematically illustrated in Fig.1, wherein it is serially connected to the power supply line 12 of an electrically powered device 14, such as e.g. a proton accelerator of an accelerator driven nuclear system (not shown). The safety device 10 is also arranged in a stream of coolant fluid (materialised by arrows 16) that cools down the reactor vessel (not shown) of the ADS, in order to interrupt the accelerator 14 power supply in case the temperature of the coolant fluid 16 rises above a predetermined threshold temperature.

The safety device 10 comprises a hollow housing 18 and two electrical conductors 20 and 20' that are guided through the housing 18. The electrical conductors preferably take the form of two electrical wires 20, 20' that are guided through the housing 18 so as to be insulated from each other and from the housing 18 itself. The outer ends of the wires (indicated 21, 21' in Fig.1) are connected to the power supply line 12. The device 10 further comprises a temperature sensitive means associated with the wires 20, 20' and designed to normally electrically connect wires 20 and 20' with each other in the housing 18, and, in response to an increase of temperature above a threshold temperature, sever the electrical connection between the two wires 20 and 20'. As will be explained below, the temperature sensitive means comprises a fusible material that melts at a threshold temperature to permit the interruption of the electrical connection between wires 20 and 20'.

It will be appreciated that the housing 18 has a shape that is designed so as to concentrate the thermal radiation transmitted therefrom to a predetermined region of the housing 18. In the present embodiment, the housing 18 is a hollow sphere, so that the thermal radiations transmitted through the housing 18 are preferentially concentrated in the central region of the housing 18. Furthermore, the temperature sensitive means are located in the central region of the housing 18. This structure of the present device 10 provides a rapid heating of the temperature sensitive means due to temperature increase of the surrounding fluid, thereby ensuring a fast reaction of the device 10.

Without willing to be bound by theory, the concentration of thermal radiations is believed to be due to the fact that thermal radiation from a typical metal surface is not diffuse, but has a forward direction, preferentially perpendicular to the surface. Therefore, by selecting a spherical shape for the inner surface of the housing 18, there will be a concentration of rays in the central part of this sphere. By using sizeable temperature sensitive means in the centre many more rays (including reflected ones), will be absorbed and the generated heat conducted to the fusible material (preferably arranged in the centre). Overall, this improves the response of the device 10.

In the present embodiment, the temperature sensitive means comprise a heat collecting structure 22 consisting of three similar disks 23 assembled so that the disks are at an angle of 90° with each other and that each of the disks passes through the centre of the imaginary sphere following the edges of said disks. The disks 23 preferably have a high thermal and a low heat capacity. In the centre is a drop 24 of fusible material that has a melting point corresponding to the threshold temperature at which the safety device is to be triggered. The first wire 20 is joined to the heat collecting structure 22 by this fusible drop 24. The second wire 20' is joined to the heat collecting structure 22 at the periphery thereof at point 26, e.g by a weld having a higher melting temperature. Electrical connection between the ends of the two wires 20 and 20' is provided by a piece of wire 28 with good electrical conductivity that is integral with the structure 22 and extends between the fusible drop 24 and point 26. The wire 28 is not required if the electrical conductivity of the structure 22 and hence of the disks 23 is considered sufficient.

When the fusible drop 24 will be heated to the threshold temperature, and thus to its melting temperature, the fusible material will melt and drop by gravity. This will loosen the connection with the first wire 20 and thereby sever the electrical connection between wires 20 and 20'.

It will be understood that the material of the fusible drop 24 will normally be selected so that its melting temperature corresponds to the desired threshold temperature at which the circuit breaking function of the safety device is to be triggered. However, to take into account very short lag in response (due to the time required for the fusible body to heat up), the fusible material may have a melting point slightly lower than the threshold temperature.

Although metal alloys are preferred, such as e.g. woods metal, the fusible drop 24 may also be made from pure metals or any materials with a high electrical conductivity and high emissivity, and also preferably reasonable strength.

The housing 18 is made of a material having a melting temperature higher than the service temperature of the device itself, and preferably substantially higher than the threshold temperature (i.e. melting temperature of the fusible drop 24). Depending on the applications, and mainly on the service temperatures, the housing may consist of pure metal, alloys (in particular steel alloys), or ceramics material.

To ensure a rapid and efficient break of the connection of electric wire 20, the structure 22 is preferably spring loaded. Accordingly a spring 25 is connected, in an extended state, at one end to the structure 22 and at the other end to the housing 18. Therefore, as the fusible drop 24 will melt, the spring 25 will retract towards the housing 18, separating the fusible drop 24 from the wire 20 terminal. The extension of the spring 25 shall be large enough to move the structure 22 away from the tip of wire 20. For use in nuclear applications, the spring 25 is preferably coated with a strong neutron absorber material.

Furthermore, the second electric conductor 20' preferably has a length, which is greater than that of the first wire 20 connected to the fusible drop 24. The length of the loose and longer wire 20' shall also ensure that wire 20 will not be in contact with body 22 after the melting of the fusible.

The housing 18 is preferably sealed to prevent the entry of a surrounding medium. Therefore, the wires 20, 20' are guided through the housing wall through an insulator 29. The insulator 29, but also the housing 18, is preferably designed to withstand the pressures exerted by the surrounding medium.

For example, for application in currently available ADS, the housing may have an outer diameter of about 3 cm. The housing wall thickness should be as small as possible, taking into account, however, the manufacturing conditions and the fact that it has to withstand an outer pressure of about 7 bars in a Pb/Bi cooled reactor and up to 70 bars in a gas-cooled fast reactor. A steel housing may thus preferably have a thickness between 1 and 2 mm. In such a case, the disks 23 of the structure 22 may preferably have a thickness of 0.1 to 0.5 mm and a diameter of 0.5 to 1.5 cm.

In order to detect a leak in the housing 18, the device 10 is advantageously provided with leak detecting means. When the device 10 is to be used in an electrically conductive medium (fluid), the leak detecting means may simply comprise two electric wires 30, 30' that are guided through the housing 18 via the insulator 29 through which wires 20 and 20' are already guided. The wires are connected to a circuit featuring a power supply 32 and a visible and/or audible alarm 34 in such a way that in normal operation of the device 10, i.e. without leak, the circuit is open and the alarm is not active (not supplied with current). Should some of the surrounding fluid 16 enter the housing 18 via a hole or the like, it would fill up the housing and, due to the electrical conductivity of the medium, provide a permanent contact between the two wires 20, 20' and thus permanently supply the accelerator 14 with current.

In such a case, the presence of electrically conductive fluid in the housing would also provide a contact between the two wires 30, 30' of the leak detection means, and thus trigger the alarm 34. The presence of electrically conductive fluid in the housing 18 can alternately be sensed by monitoring a change in the resistance measured between the two wires 30, 30', the presence of fluid being indicated by a low electrical resistance. Additionally, the leak detecting means are not only designed to inform the operator of the leak, but also to take a predetermined action (e.g. preventive action such as switching off the entire system and to replace the temperature sensitive device by a new one).

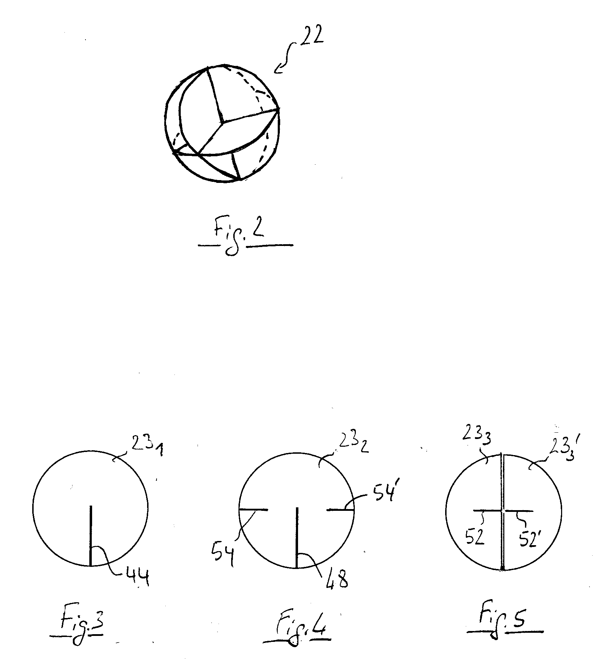

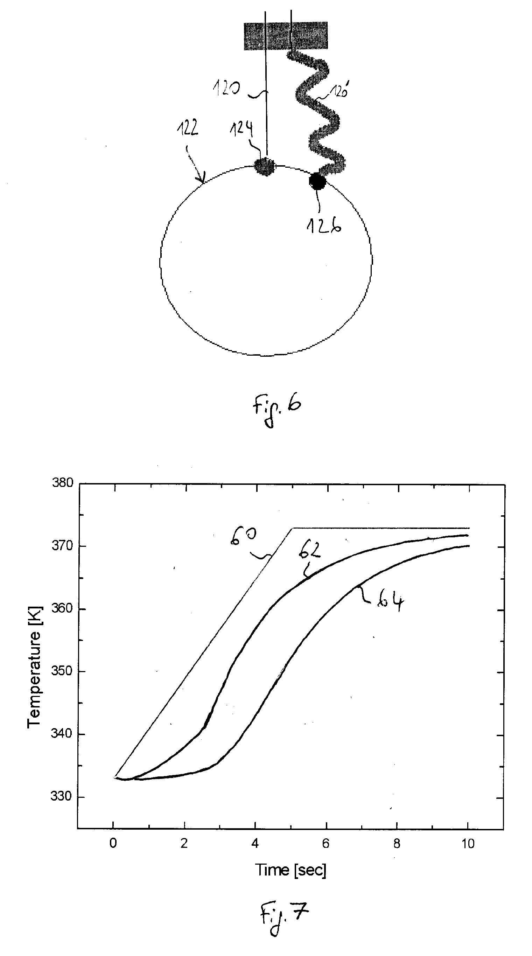

The heat collecting structure 22 is illustrated in more details in Figs. 2 to 5. As can be seen, the heat collecting structure 22 can be constructed by assembling a first disk 23₁ having a radial slot 44 extending from the disk periphery to its centre with a second disk 23₂ also having a radial slot 48 extending from the disk periphery to its centre. These two disks 23₁, 23₂ are assembled through the cooperation of their radial slots 44 and 48. The third disk consists in fact of two disk halves 23₃, 23₃', each having a partial slot 52, 52' extending from the centre of the flat disk edge and perpendicularly thereto. As can be seen in Fig.4, the second disk 46 is provided with two diametrically opposed slots 54, 54' extending over part of the radius. The assembly of the third disk is thus done by inserting each disk-halve 23₃, 23₃' in a respective slot 54, 54' of the second disk 23₂, the size of the disk-halve slots 52, 52' matching that of the partial slots 54, 54' of the second disk 23₂.

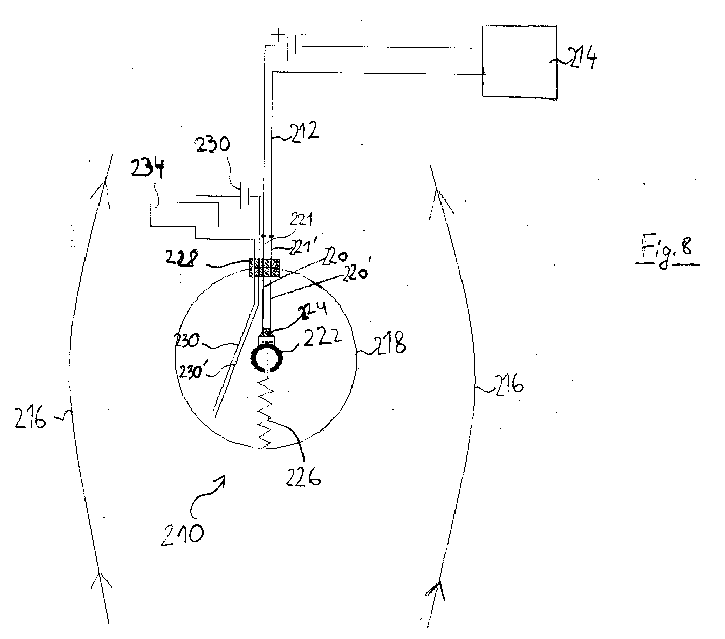

In a second embodiment, the heat collecting structure designed as a cross in the embodiment of Fig.1 takes the form of a hollow sphere indicated 122 in Fig.6. The sphere 122 is made of a metal or alloy having a high melting point, so that the sphere does not melt at the temperature at which the connection must be interrupted. The first wire 120 is joined to the sphere by a fusible drop 124 of a material that melts at the threshold temperature. The second wire 120' is joined to the sphere 122 by a weld 126 of a material having a high melting temperature. As for the embodiment of Fig.1, this sphere is arranged in the centre of the housing (not shown) and radiation transmitted by the housing will be collected by the sphere 122 and heat up the fusible drop 124. When the fusible drop 124 will reach its melting temperature, the sphere 22 will drop due to gravity and disconnect from the first wire 120, thereby severing the electrical connection between the two wires 120 and 120'.

In this second embodiment, it is advantageous to use a sphere 122 with a low heat capacity and made of a material having relatively good thermal and electrical conductivities.

A third embodiment of the present device is shown in Fig.8. The device 210 is serially connected in the power supply line 212 of an electrically powered device 214 and arranged in a stream of coolant fluid (materialised by arrows 16), in order to interrupt the power supply in case the temperature of the coolant fluid 216 rises above a predetermined threshold temperature.

The safety device 210 comprises a hollow housing 218 and two electrical conductors 220 and 220' that are guided through the housing 218. The electrical conductors preferably take the form of two electrical wires 220, 220' that are guided through the housing 218 so as to be insulated from each other and from the housing 218 itself. The outer ends of the wires (indicated 221, 221' in Fig.8) are connected to the power supply line 212. The device 210 further comprises a heat collecting structure, indicated 222 in Fig.8, associated with the wires 220, 220' and designed to normally electrically connect these wires 220, 220' with each other in the housing 218, and, in response to an increase of temperature above a threshold temperature, sever the electrical connection between the two wires 220, 220'.

It will be appreciated that the housing 218 has a shape that is designed so as to concentrate the thermal radiation transmitted therefrom to a predetermined region of the housing 218. In the present embodiment, the housing 218 is a hollow sphere, so that the thermal radiations transmitted through the housing 218 are preferentially concentrated in the central region of the housing. Furthermore, the heat collecting structure 222 is located in the central region of the housing 218. This structure of the present device 210 provides a rapid heating of the heat collecting structure 222 due to temperature increase of the surrounding fluid, thereby ensuring a fast reactivity or the device 210.

The heat collecting structure 222 is a hollow metal body of generally spherical shape made of a fusible material that is electrically conductive and that has a melting point corresponding to the threshold temperature at which the safety device is to be triggered. When the fusible body 222 will be heated to the threshold temperature―and thus to its melting temperature―the body will melt and drop by gravity, thereby severing the electrical connection between wires 220 and 220'.

To ensure a rapid and efficient break of the connection between the two electric wires 220 and 220', the fusible body 222 is preferably spring loaded. Another way to ensure a rapid and efficient break is to add a mild explosive material to the fusible body that blows up at the threshold temperature.

In the present embodiment, the inner extremities of the wires 220, 220' are separated by a spacer 224 and also connected by the fusible body 222. A spring 226 is connected, in an extended state, at one end to the body 222 and at the other end to the housing 218. Therefore, as the fusible body 222 will melt, the spring will retract, taking the melted body material away from the wire 220, 220' terminals. The spacer 224 ensures that no fusible material gets stuck between the ends of the two wires 220 and 220'. For use in nuclear application, the spring 226 is preferably coated with a strong neutron absorber material.

The housing 218 is preferably sealed to prevent the entry of surrounding medium. Therefore, the wires 220, 220' are guided through the housing wall by means of an insulator 228. The insulator 228, but also the housing 218, is preferably designed to withstand the pressures exerted by the surrounding medium.

In order to detect a leak in the housing 218, the device 210 is advantageously provided with leak detecting means. When the device 210 is to be used in an electrically conductive medium (fluid), the leak detecting means may simply comprise two electric wires 230, 230' that are guided through the housing 218 via the insulator 228 through which wires 220 and 220' are already guided. The wires are connected to a circuit featuring a power supply 232 and a visible and/or audible alarm 234 in such a way that in normal operation of the device 210, i.e. without leak, the circuit is open and the alarm is not active (not supplied with current). Should some of the surrounding fluid 216 enter the housing 218 via a hole or the like, it would fill up the housing and, due to the electrical conductivity of the medium, provide a permanent contact between the two wires 220, 220', and thus, permanently supply the accelerator 214 with current.

For application in currently available ADS, considering the high pressures to which the device would be subjected, the housing 218 may have an outer diameter of up to 3 cm. Its wall thickness may be between 1 and 2 mm. The spherical fusible body 222 may have an outer diameter of about 0.6 cm and a wall thickness about 0.15 mm.

Turning now to Fig.7, the graph shows the reactivity of the present device as in its embodiment of Fig.1. The device 10is placed in a stream of water flowing around the device 10 at 0.5 m/s and getting heated up at a rate of 8°C/s below the outer sphere. The water temperature ramp is indicated 60 in Fig.7. The temperature of the housing 18 is indicated 62 whereas reference sign 64 indicates the temperature of the fusible drop 24 as obtained via computer-assisted fluid dynamics calculation (STAR-CD-a renowned commercial Computational Fluid Dynamics or CFD code).

As can be seen, the safety device temperature rises at the same rate as the external temperature, and the delay is short (a few seconds), which provides a fast and precise response of the device 10.

## Claims

1. A temperature sensitive safety device comprising:
a hollow housing;
two electric conductors guided through said housing;
temperature sensitive means associated with said electric conductors and designed to normally provide an electrical connection between said electric conductors in said housing, and, in response to an increase of temperature above a threshold temperature, break the electrical connection between said two electric conductors,
**characterised in that**
said housing has a shape that is designed so as to concentrate thermal radiations transmitted through said housing in a predetermined region of said housing; and
said temperature sensitive means are located in said predetermined region.

2. The safety device according to claim 1, **characterised in that** said housing is designed so that the transmitted thermal radiations are predominantly directed towards said predetermined region.

3. The safety device according to claim 1 or 2, **characterised in that** said housing has an inner spherical shape and **in that** said predetermined region in which said temperature sensitive means are located corresponds to the central region of said housing.

4. The safety device according to claim 3, **characterised in that** said housing has a generally spherical shape.

5. The safety device according to claim 4, **characterised in that** said housing has an outer diameter comprised between 1 and 10 cm, preferably between 2 cm and 4 cm, and a wall thickness comprised between 0.5 mm and 5 mm, preferably between 1 mm and 3 mm.

6. The safety device according to any one of claims 1 to 5, **characterised in that** said temperature sensitive means comprise a heat collecting structure and **in that** a first of said two electric conductors is joined to said heat collecting structure by a fusible body made of a material that melts when said threshold temperature is reached.

7. The safety device according to claim 6, **characterised in that** the second electric conductor is joined to said heat collecting structure and is connected to said first conductor via a piece of electric conductor that is integral with the heat collecting structure.

8. The safety device according to claim 6 or 7, **characterised in that** said heat collecting structure consists of three similar disks assembled so that each disk has an angle of 90° with the other ones and that each of the disks passes through the centre of the imaginary sphere following the edges of said disks.

9. The safety device according to claim 8, **characterized in that** said first conductor is joined to said heat collecting structure by said fusible body about the centre of said heat collecting structure and **in that** said second electrical conductor is joined to said heat collecting structure at a periphery thereof.

10. The safety device according to claim 6 or 7, **characterised in that** said heat collecting structure is a hollow sphere.

11. The safety device according to any one of claims 6 to 10, **characterised in that** said second electrical conductor has a greater length than said first electric conductor.

12. The safety device according to any one of the preceding claims, **characterised in that** said temperature sensitive means comprise a fusible body made of a material that melts when said threshold temperature is reached, said fusible body bridging the ends of said two electrical conductors.

13. The safety device according to claims 12, **characterised in that** said fusible body is a hollow or full generally spherical element.

14. The safety device according to any one of the preceding claims, **characterised by** biasing means that tend to discontinue the electrical connection between said electrical conductors.

15. The safety device according to any one of the preceding claims, **characterised in that** said heat collecting structure and/or fusible material comprises a mild explosive material that blows up at said threshold temperature.

16. The safety device according to any one of the preceding claims, **characterised in that** said housing is made of a material having a melting temperature above said threshold temperature and substantially above the desired service temperature of said safety device.

17. The safety device according to any one of the preceding claims, **characterised in that** said housing is made of metal, metal alloy or ceramics having a high thermal diffusivity.

18. The safety device according to claim 17, **characterised in that** said housing is made from a material selected from the group comprising: aluminium, aluminium alloy, beryllium, steel, silver, silver alloy, steel, beryllium oxide, magnesium oxide and silicon carbide; the beryllium oxide, magnesium oxide and silicon carbide being optionally strengthened by carbon fibres.

19. The safety device according to any one of the preceding claims, **characterised in that** said housing is sealed to prevent any entry of surrounding medium.

20. The safety device according to any one of the preceding claims, **characterised by** leak detecting means.

21. The safety device according to any one of the preceding claims, **characterised in that** said housing has an inner surface provided with a surface treatment to improve the forward distribution of thermal radiations.

22. Use of a temperature sensitive safety device according to any one of the preceding claims in an accelerator driven nuclear system, the safety device being connected in a power supply circuit of a particle beam source and placed in a stream of coolant fluid.

23. Use of a temperature sensitive safety device according to any one of claims 1 to 21 as a temperature sensitive fuse in a nuclear reactor, an internal combustion engine, electrical engine or appliance, an industrial machine or installation.
